# EUROPÄISCHE PATENTSCHRIFT

(11) **EP 3 294 826 B1**
(45) Veröffentlichungstag und Bekanntmachung des Hinweises auf die Patenterteilung: **04.08.2021**
(21) Anmeldenummer: 16745037.8
(22) Anmeldetag: 11.05.2016
(51) Int. Cl.: C09J 7/20, G01N 1/28, C09J 7/22, C09J 7/24, C09J 7/40, G01N 1/02

(54) **SPURENSICHERUNGSFOLIE**
FOIL FOR SECURING OF EVIDENCE
FEUILLE POUR RELEVÉ D'EMPREINTES

(30) Priorität: 11.05.2015 DE 202015102416 U
(43) Veröffentlichungstag der Anmeldung: 21.03.2018
(73) Patentinhaber: Lehmkuhl, Jochen, 47574 Goch (DE)
(72) Erfinder: Lehmkuhl, Jochen, 47574 Goch (DE)
(74) Vertreter: Bonsmann, Joachim Bernhard
(86) Internationale Anmeldenummer: PCT/DE2016/100221
(87) Internationale Veröffentlichungsnummer: WO 2016/180408

(56) Entgegenhaltungen:
- WO-A1-2014/146197
- WO-A2-2009/108229
- US-A- 4 805 468
- US-B1- 6 925 896

## Beschreibung

Die vorliegende Erfindung betrifft eine Spurensicherungsfolie gemäß dem Oberbegriff des Patentanspruches 1 sowie die Verwendung einer derartigen Spurensicherungsfolie gemäß Patentanspruch 13.

Spurensicherungsfolien dienen dazu, auf Oberflächen befindliche kleinste Partikel, insbesondere Unfallspuren bei Kraftfahrzeugen, zu sichern, um diese dann abseits des Unfallorts einer eingehenden Untersuchung unterziehen zu können. Derartige Spurensicherungsfolien sind aber auch beispielsweise zur Sicherung von Fingerabdrücken etc. geeignet.

Eine bekannte Spurensicherungsfolie besteht aus einer transparenten Kunststofffolie, die einseitig mit einem Kleber beschichtet ist, dessen Klebeeigenschaften so eingestellt sind, dass dieser die zu sichernden Spuren von der zu untersuchenden Oberfläche aufnimmt und festhält, ohne Oberflächenbeschichtungen der Oberfläche selbst (Lackschichten etc.) abzulösen. Um die Folien nach und vor der Spurensicherung transportfähig zu machen, ist bei der bekannten Folie ein silikonisiertes Trägerpapier vorgesehen, auf das die Folie aufgeklebt ist und auf das diese nach der Spurensicherung wieder aufgeklebt wird. Dadurch sind die gesicherten Fremdpartikel von beiden Seiten eingeschlossen und festgehalten, so dass die entsprechende Folie verschickt, archiviert etc. werden kann.

Zur Auswertung wird die Spurensicherungsfolie in der Regel durch die transparente Folie hindurch visuell, ggf. unter Zuhilfenahme einer Lupe oder eines Mikroskops, untersucht. Falls direkter Zugriff auf die Fremdpartikel erforderlich ist, z.B. zum Zwecke chemischer Analysen, wird das Trägerpapier entfernt. Auch für eine Vergleichsuntersuchung mehrerer Folien bietet es sich an, das Trägerpapier zu entfernen, da man dann die transparenten Folien (z.B. kreuzweise) übereinander legen und die Vergleichsproben so z.B. unter einem Mikroskop optimal vergleichen kann. In dem Zustand besteht ohne Trägerpapier besteht allerdings die Gefahr, dass unbeabsichtigt verunreinigende Fremdpartikel vom Untersuchungsplatz oder von anderen Folien auf die Spurensicherungsfolie gelangen. Auch wenn dies durch sorgfältige Arbeitsweise vermieden werden kann, stellt diese Gefahr eine mögliche Beeinträchtigung der Beweiskraft derartiger Folienasservate dar. Ferner kann bei evtl. Verwechslungen von Trägerpapieren auch eine Verunreinigung der Folien durch evtl. am Trägerpapier anhaftende Partikel von einer anderen Spurensicherungsfolie auftreten, was insbesondere für Vergleichsaufgaben fatal wäre. Zudem ist die Entfernung der Klebefolie von dem Trägerpapier manchmal unter den vielfach erschwerten Einsatzbedingungen bei einem Verkehrsunfall (Witterungsbedingungen, Dunkelheit) schwierig zu bewerkstelligen.

Die US 4 805 468 A beschreibt ein Foliengebilde zur Sicherung primär von Faserspuren, bestehend aus einer transparenten Trägerfolie mit Klebeschicht und einer transparenten Abdeckfolie.

Die WO 2009/108229 A2 offenbart einen Probensammler und eine Probenhülle zur Sammlung und Analyse mikrobiologischer Proben.

Aus der WO 2014/146197 A1 ist eine schmale Spurenanalysefolie bekannt, bei der die Folie in Rollenform bereitgestellt werden kann, von der einzelne Blätter mittels Perforationen abgetrennt werden können.

Die US 6 925 896 B1 betrifft ein Spurensicherungs-Flächengebilde in der Größe etwa einer Fußmatte, das an einem Zugang zu einem forensisch zu untersuchenden Tatort für die Untersuchung auf dem Fußboden ausgelegt wird, damit versehentlich an den Schuhen bzw. Überschuhen der Untersucher anhaftende Tatortspuren von dem Flächengebilde aufgenommen werden und/oder damit eine Kontamination des Tatorts mit versehentlich anhaftenden "eingeschleppten" Spuren vermieden wird bzw. derartiges nachträglich erkennbar ist.

Der Erfindung liegt die Aufgabe zugrunde, eine bekannte Spurensicherungsfolie hinsichtlich ihrer Handhabbarkeit und Beweissicherungseigenschaften zu verbessern.

Die Lösung der vorgenannten Aufgabe erfolgt mittels einer Spurensicherungsfolie mit den Merkmalen des Patentanspruches 1 sowie der Verwendung einer derartigen Spurensicherungsfolie gemäß Anspruch 13.

Vorteilhafte Ausgestaltungen sind in den abhängigen Patentansprüchen beschrieben.

Erfindungsgemäß weist eine Spurensicherungsfolie, insbesondere zur Spurensicherung bei Fahrzeug-Unfallschäden, Folgendes auf:
- eine Klebefolie, die eine transparente Kunststoffträgerfolie und eine darauf auf eine Seite aufgebrachte Klebeschicht aufweist, wobei die Klebeschicht dahingehend ausgebildet ist, Spuren von einem Spurenort aufzunehmen und zu konservieren, und
- ein Trennabdeckungsflächengebilde, das wenigstens in Teilbereichen entfernbar zur Abdeckung der Klebeschicht im Vorgebrauchszustand sowie im Aufbewahrungszustand ausgebildet ist, und das wenigstens auf seiner der Klebeschicht zugewandten Seite eine silikonisierte Beschichtung oder eine anderweitig von der Klebeschicht zerstörungsfrei trennbare Oberflächenbeschaffenheit aufweist.

Erfindungsgemäß ist das Trennabdeckungsflächengebilde wenigstens in Teilbereichen als hochtransparente Folie ausgebildet, die eine Untersuchung der mit der Trennabdeckungsfolie versehenen Klebefolie nach der Spurensicherung auch durch die Trennabdeckungsfolie hindurch ermöglicht.

Dadurch ist ein Entfernen der Trennabdeckungsfolie nur noch z.B. für chemischanalytische Zwecke erforderlich, und die gesicherten Fremdpartikel können durch die transparente Spurensicherungsfolie sowie die transparente Trennabdeckungsfolie hindurch von beiden Seiten visuell - auch mit Hilfe eines Lichtmikroskops - untersucht werden. Auch ein Probenvergleich ist durch Übereinanderlegen von in einem erfindungsgemäßen "Foliensandwich" eingeschlossenen Asservaten (z.B. in Kreuzform) problemlos möglich, ohne dass die Gefahr gegenseitiger Verunreinigung der Asservate bestünde.

Weiterhin ist die Spurensicherungsfolie im Wesentlichen mit rechteckigem Grundzuschnitt mit Längs- und Schmalseiten ausgebildet, wobei an einer Längsseite eine im Wesentlichen durchgehende und feste, mechanisch in der Regel nicht ohne Zerstörung der Folien lösbare, im Wesentlichen linienförmige Verbindung zwischen Klebefolie und Trennabdeckungsflächengebilde, insbesondere durch Folienverschweißen oder durch Applikation eines Klebers, vorgesehen. Hierdurch werden Trennabdeckungsflächengebilde und Klebefolie gegeneinander unverlierbar ausgestaltet, so dass eine Verwechslung verschiedener Trennabdeckungsflächengebilde kaum mehr möglich ist und die Handhabung der Spurensicherungsfolie insgesamt erleichtert wird, weil das Trennabdeckungsflächengebilde nicht mehr verloren gehen kann, z.B. bei stärkerem Luftzug am Unfallort nicht mehr weggeweht werden kann.

In einer bevorzugten Ausgestaltung weist die Klebefolie zur Herstellung der festen Verbindung zu dem Trennabdeckungsflächengebilde einen streifenförmigen, in Richtung der Klebeschicht um etwa 180° auf die Seite der Klebeschicht umgefalzten Abschnitt auf, wobei die dortige Klebeschicht die Klebefolie mit der der silikonisierten oder anderweitig beschichteten Seite des Trennabdeckungsflächengebildes abgewandten Seite verklebt, wobei diese andere Seite des Trennabdeckungsflächengebildes in der Regel unbeschichtet ist oder im Hinblick auf eine relativ feste Kleberhaftung (z.B. leicht aufgeraut) ausgebildet ist. Alternativ hierzu kann auch vorgesehen sein, dass umgekehrt das Trennabdeckungsflächengebilde einen um etwa 180° umgefalzten Abschnitt aufweist, wodurch ebenfalls die der silikonisierten oder anderweitig beschichteten Seite abgewandte (in der Regel nicht beschichtete) Seite des Trennabdeckungsflächengebildes mit der Klebeschicht verklebt.

Die Realisierung der festen Verbindung erfolgt somit ohne Verwendung zusätzlicher Kleber und ohne Maßnahmen wie Folienschweißen od. dgl., indem der für die Spurensicherung auf die Klebefolie sowieso aufgebrachte Kleber für eine Verklebung mit der nicht silikonisierten (oder anderweitig klebehemmend) ausgerüsteten Rückseite des Trennabdeckungsflächengebilde genutzt wird, indem die Klebefolie entsprechend umgefalzt wird. Es hat sich herausgestellt, dass die so erzielte Klebewirkung durchaus ausreichend ist, um das Trennabdeckungsflächengebilde nur sehr schwer entfernbar zu machen. Zusätzliche Maßnahmen wie ein Verschweißen oder Verwendung eines stärkeren Klebers sind möglich.

Um die praktische Handhabbarkeit der Spurensicherungsfolie zu verbessern, können die Klebefolie und/oder das Trennabdeckungsflächengebilde zur Aufbringung von Identifizierungsbeschriftungen ausgebildet sein. Ferner können in regelmäßigen Abständen vorgedruckte, optische Identifizierungsmerkmale zur eindeutigen Identifizierbarkeit des verwendeten Spurensicherungsfolienabschnitts, insbesondere eindeutige Kennnummern oder Barcodes, vorhanden sein. Ferner kann die Handhabbarkeit der Spurensicherungsfolie dadurch verbessert werden, dass bei einer Spurensicherungsfolie, die im Wesentlichen mit rechteckigem Grundzuschnitt mit Längs- und Schmalseiten ausgebildet ist, an einer Längsseite, die einer ggf. vorhandenen festen Verbindung der Klebefolie und des Trennabdeckungsflächengebildes gegenüberliegt, randseitig die Wirkung der Klebeschicht aufgehoben ist. Dadurch wird eine auch als "Fingerfind" bezeichnete Lasche geschaffen, die ein einfaches Lösen der Klebefolie von dem Trennabdeckungsflächengebilde erlaubt.

Bevorzugt kann zur Aufhebung der Wirkung der Klebeschicht ein im Wesentlichen nicht transparenter Materialstreifen, insbesondere ein Papierstreifen, fest mit der Klebeschicht im Randbereich verbunden sein. Dieser Papierstreifen kann einfach auf die Klebeschicht aufgeklebt werden und kann so als "Fingerfind" dienen.

Dabei kann vorgesehen sein, dass sich das Trennabdeckungsflächengebilde auf der Seite des im Wesentlichen nicht transparenten Materialstreifens nicht bis zum Rand der Klebefolie erstreckt, sondern im Bereich des im Wesentlichen nicht transparenten Materialstreifens endet; bevorzugt so, dass die entsprechende Endkante des Trennabdeckungsflächengebildes im Wesentlichen mit der innenseitigen Endkante des Materialstreifens fluchtet. Hierdurch wird vermieden, dass im Bereich des "Fingerfinds" die Trennabdeckungsflächengebilde als freie Lasche ohne Klebeverbindung vorliegt, wodurch Problemen bei der Handhabung der Folie, z.B. einem Umklappen oder einer Faltenbildung bei einem Einschieben in eine Prospekthülle, entgegengewirkt wird. Ferner wird dadurch die Handhabung des "Fingerfinds" verbessert, da der auf die Klebefolie aufgebrachte Materialstreifen diese verstärkt und es so ermöglicht, dass dieser Materialstreifen zum partiellen Abziehen der Folie abgeknickt wird und so das Trennabdeckungsflächengebilde von der Klebefolie in dem an den Materialstreifen anschließenden Grenzbereich entfernt wird.

Ferner erleichtert dieses verkürzte Trennabdeckungsflächengebilde die Nutzung des Materialstreifens zu Beschriftungszwecken, da der Materialstreifen hierdurch auf einer Seite freiliegt. Hierzu kann der im Wesentlichen nicht transparente Materialstreifen an seiner durch das zurückspringende Trennabdeckungsflächengebilde zugänglichen Seite zur dauerhaften Aufnahme einer Beschriftung mittels Bleistift, Kugelschreibern, Filzstiften od. dgl. ausgebildet sein.

In einer bevorzugten Ausgestaltung kann die Spurensicherungsfolie im Vorgebrauchszustand eine wesentlich größere Längserstreckung als Breitenerstreckung aufweisen, wobei quer zur Längserstreckung ein oder mehrere Perforationen, insbesondere Mikroperforationen, zur leichten Abtrennbarkeit einzelner Spurensicherungsfolienabschnitte vorhanden sind.

In diesem Falle kann die Spurensicherungsfolie bevorzugt im Vorgebrauchszustand als Rollenware ausgebildet sein.

Ferner kann die Auswahl und Dimensionierung der Materialen für eine erfindungsgemäße Spurensicherungsfolie - ohne Beschränkung auf diese Angaben und Materialien - derart sein, dass
- die transparente Kunststoffträgerfolie der Klebefolie aus PP (Polypropylen), bevorzugt mit einer Schichtdicke von ca. 50 µm, hergestellt ist, und/oder
- dass die Klebeschicht im Wesentlichen aus einem wasserlöslichen Kleber gebildet ist, und/oder
- dass das Trennabdeckungsflächengebilde im Wesentlichen aus einer PET-Folie, bevorzugt mit einer Schichtdicke von ca. 50 µm, hergestellt ist, und/oder
- dass das Trennabdeckungsflächengebilde zur Herstellung der Trennwirkung wenigstens auf der der Klebeschicht zugewandten Seite silikonisiert ausgebildet ist.

Dabei kann die Klebeschicht eine Dicke von 10 µm bis 100 µm, bevorzugt von 10 µm bis 30 µm, besonders bevorzugt von etwa 18 µm mit einer Toleranz von ca. ±2 µm, aufweisen.

Die Klebeschicht kann ferner derart eingestellt sein, dass ein Herauslösen der gesicherten Spuren mittels eines Lösungsmittels, insbesondere der sog. türkischen Lösung, ermöglicht wird.

Die erfindungsgemäßen Spurensicherungsfolien können in einem angepassten Archivierungsmittel aufbewahrt werden, das einen Träger aufweist, der zum Einheften in eine Handakte üblichen Formats ausgebildet ist, wobei auf dem Träger ein oder mehrere, vorzugsweise zwei, vorzugsweise transparente Taschen zur Aufnahme ein oder mehrerer Spurensicherungsfolien vorgesehen sind, die mittels versiegelbarer Laschen derart verschließbar sind, dass ein Herausfallen von Spurensicherungsfolien, der Kontakt von Spurensicherungsfolien aus unterschiedlichen Taschen sowie ein Herausnehmen von Spurensicherungsfolien ohne Beschädigung der Taschen und ggf. ohne Siegelbruch ausgeschlossen sind.

Eine mögliche Anwendung der erfindungsgemäßen Spurensicherungsfolie erfolgt bevorzugt in einem Verfahren zur Spurensicherung eines Fahrzeug-Unfallschadens unter Verwendung einer Spurensicherungsfolie mit folgenden Schritten:
a) Konfektionieren der Spurensicherungsfolie abhängig von der Geometrie des zu sichernden Spurenortes,
b) wenigstens teilweises Abziehen des Trennabdeckungsflächengebildes,
c) Aufbringen der Klebeschicht auf den Spurenort zur Sicherung der Spuren und Widerabziehen derselben, und
d) Wiederaufbringen des Trennabdeckungsflächengebildes.

In einer Ausführungsform kann ein zusätzlicher Schritt des Fotografierens der auf den Spurenort aufgebrachten Spurensicherungsfolie zusammen mit wenigstens einem auf der Folie vorhandenen oder vorher aufgebrachten Identifizierungsmerkmal vorgesehen sein, das eine spätere Identifizierung des auf den Spurenort aufgebrachten Spurensicherungsfolienabschnittes ermöglicht.

Als zusätzlicher Schritt kann weiterhin ein Archivieren der zu einem Unfallereignis gehörenden Spurensicherungsfolien in wenigstens zwei voneinander getrennten und jeweils versiegelbaren Taschen vorgesehen sein, wobei ein oder mehrere Taschen auf einem Archivierungsmittel aufgebracht sind, das zum Einheften in eine Handakte üblichen Formats ausgebildet ist.

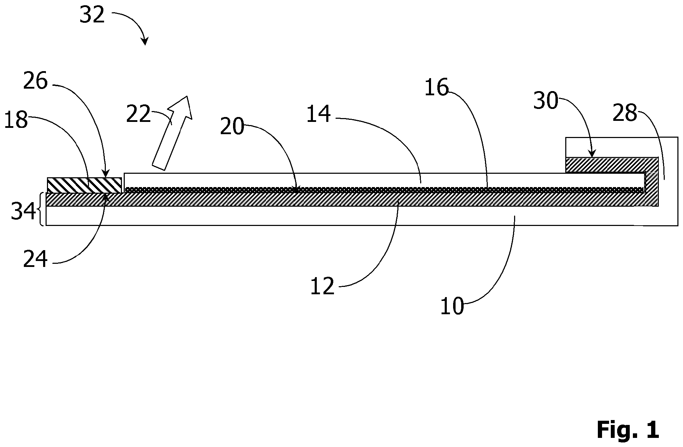

Die Erfindung wird nachfolgend anhand eines in der Zeichnung dargestellten Ausführungsbeispiels näher erläutert.

Die einzige Figur zeigt eine schematische, aus Veranschaulichungsgründen nicht maßstabsgerechte Schnittdarstellung einer erfindungsgemäßen Spurensicherungsfolie, die insgesamt mit 32 bezeichnet ist. Die Schnittdarstellung ist hier in Querrichtung angelegt. In der zur Schnittebene senkrechten Längsrichtung kann die Spurensicherungsfolie 32 als langgestreckte Rollenware ausgebildet sein, die in regelmäßigen Abständen Mikroperforationen aufweist und somit rechteckförmige Abschnitte abgetrennt werden können. Es kann auch vorgesehen sein, dass der Anwender die jeweils benötigte Länge mit einer Schere oder einer Schneidemaschine od. dgl. selbst konfektioniert. Die bevorzugte Breite der Spurensicherungsfolie beträgt 170 mm, wobei selbstverständlich auch andere Breiten möglich sind.

Die Spurensicherungsfolie 32 besteht aus einer hochtransparenten Trägerfolie 10 aus Polypropylen (PP) mit einer Materialstärke von ca. 50 µm (Mikrometer) und beidseitig glatten Folienoberflächen. Klebeeigenschaften erhält die Trägerfolie 10 durch eine gleichmäßig aufgebrachte Klebeschicht 12 eines wasserlöslichen Klebers. Trägerfolie 10 und Trägerschicht 12 zusammen werden nachfolgend auch als Klebefolie 34 bezeichnet.

Die Stärke der Klebeschicht (hier nicht maßstäblich dargestellt) beträgt bevorzugt ca. 18 µm ± 2 µm. Die Klebeschicht 12 beeinträchtigt bei derartigen Schichtdicken den Transparenzgrad des Foliengebildes nicht oder kaum. Die Klebeschicht 12 ist zusammen mit den Hafteigenschaften und der Steifigkeit der Trägerfolie 10 so eingestellt, dass diese bei einem Aufbringen auf einen Spurensicherungsort zu sichernde Fremdkörper in ihrer ursprünglichen Lage abnimmt und festhält, woraus dann später nicht nur Information über die Art der Fremdkörper selbst, sondern auch über die Kinematik eines Unfallgeschehens (Relativgeschwindigkeiten etc.) abgeleitet werden können.

Die Klebefolie 34 ist im Vorgebrauchs- und Nachgebrauchszustand von einer Trennabdeckungsfolie 14 abgedeckt. Dabei handelt es sich bevorzugt um eine gegenüber der Trägerfolie 10 etwas elastischere, ebenfalls hochtransparente und mit glatten Oberflächen versehene PET- (Polyethylenterephthalat)-Folie 14 von bevorzugt ebenfalls ca. 50 µm Dicke. Diese ist einseitig auf der der Klebefolie 34 zugewandten Seite mit einer fest an der Folie 14 haftenden Silikonisierungsschicht 16 (Schichtdicke typischerweise einige µm, nicht maßstäblich dargestellt) versehen, die ebenfalls den Transparenzgrad der Folie 14 nicht nennenswert beeinflusst. Durch die Silikonisierungsschicht 16 kann die Folie 14 - abgesehen von dem weiter unten erläuterten rechten Randbereich - problemlos und zerstörungsfrei, ggf. auch mehrfach, von der Klebeschicht 12 der Trägerfolie 10 abgezogen werden, wie durch den Pfeil 22 angedeutet, und auch dort wieder aufgebracht werden, wodurch zwischenzeitlich gesicherte im Bereich der Oberseite 20 der Klebeschicht 12 festgehaltene Fremdkörper praktisch nicht beeinträchtigt werden.

Die Trennabdeckungsfolie 14 erstreckt sich nicht über die gesamte Breite der Trägerfolie 10. Am im Ausführungsbeispiel linken Rand ist nämlich auf der Klebeschicht 12 der Folie ein nicht transparenter Papierstreifen 18 aufgeklebt, der die Klebewirkung dort aufhebt, und die Trennabdeckungsfolie 14 erstreckt sich nur bis zum Rand dieses Papierstreifens 18. Der Papierstreifen 18 ist typischerweise ca. 15 mm breit. Anstelle eines Papierstreifens können grundsätzlich auch andere folienartige Flächengebilde, wie z.B. Kunststofffolien, eingesetzt werden, die dort die Klebewirkung aufheben.

Dieser Papierstreifen 18 hat mehrere Funktionen: Zum einen erleichtert er als Teil eines sog. "Fingerfinds" die Ablösung der Trennabdeckungsfolie 14 von der Klebefolie 34, da der Papierstreifen 18 durch die Erhöhung der Steifheit der Folie in dessen Bereich ein Umknicken der Klebefolie 34 erleichtert, woraufhin die Trennabdeckungsfolie 14 sich von der Klebeschicht ablöst und dann leicht gegriffen werden kann. Ggf. kann dieser Vorgang dadurch weiter erleichtert werden, dass die Trennabdeckungsfolie 14 einige Millimeter überlappend mit dem Papierstreifen 18 ausgebildet wird, so dass sich diese in diesem Bereich etwas aufstellt (nicht dargestellt).

Ferner bietet der Papierstreifen 18 eine bequeme Beschriftungsmöglichkeit der Spurensicherungsfolie 32 mit allen üblichen Beschriftungsmitteln, die nicht wasserfest bzw. permanent zu sein brauchen, d.h. Bleistift, Kugelschreiber oder Filzschreiber etc. Die Beschriftung ist auch dadurch vereinfacht, dass die entsprechende Oberseite 26 des Papierstreifens 18 durch die Verkürzung der Trennabdeckungsfolie 14 freiliegt. Auf der auf der Klebeschicht 12 haftenden Unterseite 24 des Papierstreifens kann eine gedruckte Beschriftung angebracht werden, z.B. eine Typenbeschreibung des Spurensicherungsfolie und ggf. eine Codierung des Folienabschnitts mittels einer fortlautenden Nummer oder eines Barcodes. Durch die transparente Klebefolie 34 ist diese Beschriftung oder dieser Aufdruck auf der Unterseite 24 des Papierstreifens 18 sichtbar und gleichzeitig geschützt. Falls ein anderes Material als Papier für den Streifen 18 verwendet wird, so kann dieses durch eine geeignete Beschichtung mit konventionellen (nicht permanenten) Schreibmitteln beschreibbar gemacht werden, z.B. durch eine auf der Oberseite aufgebrachte Gelatineschicht. Der Papierstreifen 18 hat neben den vorbeschriebenen Vorteilen den weiteren Vorteil, dass durch diesen optisch auffälligen Streifen 18 ein einfacher Orientierungspunkt für die Ausrichtung der Folie bzw. der Reproduktion der Ausrichtung der Folie 32 gegeben ist.

Auf der in der Figur rechten Seite sind Klebefolie 34 und Trennabdeckungsfolie 14 unverlierbar miteinander verbunden. Dies wird durch eine Umfalzung 28 der Klebefolie 34 um ca. 180° erreicht. Die Angabe 180° bezieht sich auf den Vor- bzw. Nachgebrauchszustand der Folie, bei dem die Folien 34 und 14 sandwichartig aufeinander kleben; bei einem Entfernen der Folie 14 in Pfeilrichtung 22 ergibt die Verbindung 28 eine Art Gelenk. Die genannte Umfalzung 28 umgreift in einem streifenförmigen Abschnitt von bevorzugt ca. 7 mm Breite die Trennabdeckungsfolie 14, so dass die Klebeschicht 12 an der nicht silikonisierten Oberseite 30 der Trennabdeckungsfolie 14 anliegt und dort eine schwer lösbare Klebeverbindung herstellt.

Dies ist in der Zeichnung lediglich schematisch dargestellt; anstelle des dargestellten winkelförmigen Verlaufs der Folie wird sich in der Realität eine U-oder V-förmige Form ergeben.

Es hat sich herausgestellt, dass diese Klebeverbindung ausreichend fest ist, um ein versehentliches vollständiges Entfernen bzw. Verlieren der Trennabdeckungsfolie 14 nahezu auszuschließen. Auf diese Weise wird die vorhandene Klebeschicht 12 neben der Spurensicherungsfunktion gleich mehrfach genutzt, einmal zur Aufnahme und Fixierung des Papierstreifens 18 und zum anderen zur Herstellung einer unverlierbaren seitlichen Verbindung zur Trennabdeckungsfolie 14.

Selbstverständlich sind auch andere Verbindungsmöglichkeiten zwischen Trägerfolie 10 und Trennabdeckungsfolie 14 denkbar, beispielsweise ein thermisches Verschweißen, eine Prägeverbindung, eine Klammerverbindung oder die Aufbringung eines separaten Klebstoffes.

## Patentansprüche

1. Spurensicherungsfolie (32), insbesondere zur Spurensicherung bei Fahrzeug-Unfallschäden, mit
- einer Klebefolie (34), die eine transparente Kunststoffträgerfolie (10) und eine darauf auf eine Seite aufgebrachte Klebeschicht (12) aufweist, wobei die Klebeschicht (12) dahingehend ausgebildet ist, Spuren von einem Spurenort abzulösen und zu konservieren, und
- einem Trennabdeckungsflächengebilde (14), das wenigstens in Teilbereichen entfernbar zur Abdeckung der Klebeschicht (12) im Vorgebrauchszustand sowie im Aufbewahrungszustand ausgebildet ist, und das wenigstens auf seiner der Klebeschicht (12) zugewandten Seite eine silikonisierte Beschichtung (16) oder eine anderweitig von der Klebeschicht zerstörungsfrei trennbare Oberflächenbeschaffenheit aufweist, wobei
das Trennabdeckungsflächengebilde (14) wenigstens in Teilbereichen als hochtransparente Folie ausgebildet ist, die eine Untersuchung der mit der Trennabdeckungsfolie (14) versehenen Klebefolie (32) nach der Spurensicherung auch durch die Trennabdeckungsfolie (14) hindurch ermöglicht
**dadurch gekennzeichnet, dass**
die Spurensicherungsfolie (32) im Wesentlichen mit rechteckigem Grundzuschnitt mit Längs- und Schmalseiten ausgebildet ist, und dass das Trennabdeckungsflächengebilde (14) mit der Klebefolie (34) an einer Längsseite mittels einer im Wesentlichen durchgehenden und festen, mechanisch in der Regel nicht ohne Zerstörung der Folien lösbaren, im Wesentlichen linienförmigen Verbindung (28), insbesondere durch einen Kleber oder Folienverschweißen, verbunden ist.

2. Spurensicherungsfolie (32) nach Anspruch 1,
**dadurch gekennzeichnet, dass**
die Klebefolie (34) zur Herstellung der festen Verbindung zu dem Trennabdeckungsflächengebilde (14) einen streifenförmigen, in Richtung der Klebeschicht um etwa 180° auf die Seite der Klebeschicht umgefalzten Abschnitt (28) aufweist, wobei die dortige Klebeschicht (12) die Klebefolie (34) mit der der silikonisierten oder anderweitig beschichteten Seite abgewandten Seite (30) des Trennabdeckungsflächengebildes (14) verklebt, oder dass umgekehrt das Trennabdeckungsflächengebilde einen um etwa 180° umgefalzten Abschnitt aufweist, so dass die der silikonisierten oder anderweitig beschichteten Seite abgewandte Seite des umgefalzten Bereichs des Trennabdeckungsflächengebildes mit der Klebeschicht verklebt.

3. Spurensicherungsfolie (32) nach Anspruch 1 oder 2,
**dadurch gekennzeichnet, dass**
die Klebefolie (34) und/oder das Trennabdeckungsflächengebilde (14) zur Aufbringung von Identifizierungsbeschriftungen ausgebildet sind, und/oder dass in regelmäßigen Abständen vorgedruckte, optische Identifizierungsmerkmale zur eindeutigen Identifizierbarkeit des verwendeten Spurensicherungsfolienabschnitts, insbesondere eindeutige Kennnummern oder Barcodes, vorhanden sind.

4. Spurensicherungsfolie (32) nach einem der Ansprüche 1 bis 3,
**dadurch gekennzeichnet, dass**
die Spurensicherungsfolie (32) im Wesentlichen mit rechteckigem Grundzuschnitt mit Längs- und Schmalseiten ausgebildet ist, und dass an einer Längsseite, die einer ggf. vorhandenen festen Verbindung (28) der Klebefolie (34) und des Trennabdeckungsflächengebildes (14) gegenüberliegt, randseitig die Wirkung der Klebeschicht (12) aufgehoben ist.

5. Spurensicherungsfolie (32) nach Anspruch 4,
**dadurch gekennzeichnet, dass**
zur Aufhebung der Wirkung der Klebeschicht (12) ein im Wesentlichen nicht transparenter Materialstreifen (18), insbesondere ein Papierstreifen, fest mit der Klebeschicht (12) im Randbereich verbunden ist.

6. Spurensicherungsfolie (32) nach Anspruch 4 oder 5,
**dadurch gekennzeichnet, dass**
sich das Trennabdeckungsflächengebilde (14) auf der Seite des im Wesentlichen nicht transparenten Materialstreifens (18) nicht bis zum Rand der Klebefolie (34) erstreckt, sondern im Bereich des im Wesentlichen nicht transparenten Materialstreifens (18) endet, bevorzugt so, dass die entsprechende Endkante des Trennabdeckungsflächengebildes (14) im Wesentlichen mit der innenseitigen Endkante des Materialstreifens (18) fluchtet.

7. Spurensicherungsfolie (32) nach Anspruch 6,
**dadurch gekennzeichnet, dass**
der im Wesentlichen nicht transparenten Materialstreifen (18) an seiner durch das zurückspringende Trennabdeckungsflächengebilde (14) zugänglichen Seite (26) zur dauerhaften Aufnahme einer Beschriftung ausgebildet ist.

8. Spurensicherungsfolie (32) im Vorgebrauchszustand nach einem der Ansprüche 1 bis 7,
**dadurch gekennzeichnet, dass**
diese eine wesentlich größere Längserstreckung als deren Breitenerstreckung aufweist, und dass quer zur Längserstreckung ein oder mehrere Perforationen, insbesondere Mikroperforationen, zur leichten Abtrennbarkeit einzelner Spurensicherungsfolienabschnitte vorhanden sind.

9. Spurensicherungsfolie (32) im Vorgebrauchszustand nach einem der Ansprüche 1 bis 8,
**dadurch gekennzeichnet, dass**
diese als Rollenware ausgebildet ist.

10. Spurensicherungsfolie (32) nach einem der Ansprüche 1 bis 9,
**dadurch gekennzeichnet, dass**
- die transparente Kunststoffträgerfolie (10) der Klebefolie (34) aus PP (Polypropylen), bevorzugt mit einer Schichtdicke von ca. 50 µm, hergestellt ist, und/oder
- dass die Klebeschicht (12) im Wesentlichen aus einem wasserlöslichen Kleber gebildet ist, und/oder
- dass das Trennabdeckungsflächengebilde (14) im Wesentlichen aus einer PET-Folie, bevorzugt mit einer Schichtdicke von ca. 50 µm, hergestellt ist, und/oder
- dass das Trennabdeckungsflächengebilde (14) zur Herstellung der Trennwirkung wenigstens auf der der Klebeschicht zugewandten Seite silikonisiert (16) ausgebildet ist.

11. Spurensicherungsfolie (32) nach einem der Ansprüche 1 bis 10,
**dadurch gekennzeichnet, dass**
die Klebeschicht (12) eine Dicke von 10 µm bis 100 µm, bevorzugt von 10 µm bis 30 µm, besonders bevorzugt von etwa 18 µm mit einer Toleranz von ca. ±2 µm, aufweist.

12. Spurensicherungsfolie (32) nach einem der Ansprüche 1 bis 11,
**dadurch gekennzeichnet, dass**
die Klebeschicht (12) derart eingestellt ist, dass ein Herauslösen der gesicherten Spuren mittels eines Lösungsmittels, insbesondere der sog. türkischen Lösung, ermöglicht wird.

13. Verwendung einer Spurensicherungsfolie (32) nach einem der Ansprüche 1 bis 12, insbesondere einer Spurensicherungsfolie zur Spurensicherung bei Fahrzeug-Unfallschäden,
zu
- einer visuellen Untersuchung der gesicherten Fremdpartikel von beiden Seiten;
und/oder zu
- einem Probenvergleich durch Übereinanderlegen von in sandwichartig übereinander angeordneten Spurensicherungsfolien eingeschlossenen Asservaten.

## Claims

1. Forensic evidence film (32), especially for securing evidence in the event of vehicle accident damage, with
- An adhesive film (34) which has a transparent plastic carrier film (10) and an adhesive layer (12) applied to one side, the adhesive layer (12) being designed to detach and preserve traces from a trace location, and
- A separating cover sheet (14), which is at least partially removable to cover the adhesive layer (12) in the pre-use state and in the storage state, and which has at least on its side facing the adhesive layer (12) a siliconized coating (16) or has a surface quality that can otherwise be separated non-destructively from the adhesive layer, wherein the separating cover sheet (14) is designed at least in partial areas as a highly transparent film, which enables the adhesive film (32) provided with the separating cover film (14) to be examined through the separating cover film (14) after securing evidence,
**characterized in that**
the evidence securing film (32) is essentially designed with a rectangular basic cut with longitudinal and narrow sides, and that the separating cover sheet (14) is connected with the adhesive film (34) on one longitudinal side by means of an essentially nonstop and solid and essentially linear connection (28), which mechanically cannot be detached without destroying the foils under regular conditions, in particular by means of an adhesive or by means of foil welding.

2. Forensic evidence film (32) according to claim 1,
**characterized in that**
the adhesive film (34) has, in order to obtain the solid connection to the separating cover sheet (14), a strip-shaped section (28) folded over in the direction of the adhesive layer by about 180° on the side of the adhesive layer, whereby the adhesive layer (12) glues the adhesive film (34) to the side (30) of the separating cover sheet facing away from the siliconized or otherwise coated side, or that, conversely, the separating cover sheet has a portion folded over by about 180°, so that the side facing away from the siliconized or otherwise coated side of the folded-over area of the separating cover sheet is glued to the adhesive layer.

3. Forensic evidence film (32) according to claim 1 or 2,
**characterized in that**
the adhesive film (34) and / or the separating cover sheet (14) are designed for the application of identification labels, and / or that at regular intervals preprinted, optical identification features are provided for the unambiguous identifiability of the used trace securing film section, in particular unambiguous identification numbers or barcodes.

4. Forensic evidence film (32) according to any one of claims 1 to 3,
**characterized in that**
the evidence securing film (32) is essentially designed with a rectangular basic cut with long and narrow sides, and that on one long side that is opposite to a possibly existing fixed connection (28) of the adhesive film (34) and the separating cover sheet (14), the effect of the adhesive layer (12) is canceled at the edge region.

5. Forensic evidence film (32) according to claim 4,
**characterized in that**
to cancel the effect of the adhesive layer (12), an essentially non-transparent material strip (18), in particular a paper strip, is firmly connected to the adhesive layer (12) in the edge region.

6. Forensic evidence film (32) according to claim 4 or 5,
**characterized in that**
the separating cover sheet (14) on the side of the essentially non-transparent material strip (18) does not extend to the edge of the adhesive film (34), but ends in the area of the essentially non-transparent material strip (18), preferably in such a way that the corresponding end edge of the separating cover sheet (14) is essentially aligned with the inside end edge of the material strip (18).

7. Forensic evidence film (32) according to claim 6,
**characterized in that**
the essentially non-transparent material strip (18) is designed on its side (26) accessible through the recessed separating cover sheet structure (14) to carry a permanent labeling.

8. Forensic evidence film (32) in the pre-used state according to one of claims 1 to 7,
**characterized in that**
that film has a significantly larger longitudinal extension than its width dimension, and that one or more perforations, in particular micro-perforations, are provided transversely to the longitudinal extension for easy separability of individual evidence film sections.

9. Forensic evidence film (32) in the pre-used state according to one of claims 1 to 8,
**characterized in that**
the film is designed as rolled goods.

10. Forensic evidence film (32) according to one of claims 1 to 9,
**characterized in that**
- The transparent plastic carrier film (10) of the adhesive film (34) is made of PP (polypropylene), preferably with a layer thickness of approx. 50 µm, and / or
- That the adhesive layer (12) is essentially formed from a water-soluble adhesive, and / or
- That the separating cover sheet structure (14) is made essentially from a PET film, preferably with a layer thickness of approx. 50 µm, and / or
- That the separating cover sheet (14) for producing the separating effect is siliconized (16) at least on the side facing the adhesive layer.

11. Forensic evidence film (32) according to one of claims 1 to 10,
**characterized in that**
the adhesive layer (12) has a thickness of 10 µm to 100 µm, preferably 10 µm to 30 µm, particularly preferably approximately 18 µm with a tolerance of approximately ± 2 µm.

12. Forensic evidence film (32) according to one of claims 1 to 11,
**characterized in that**
the adhesive layer (12) is set in such a way that the secured traces can be removed by means of a solvent, in particular the so-called Turkish Solvent.

13. Use of a Forensic evidence film (32) according to one of claims 1 to 12, in particular a forensic evidence film for securing evidence in the event of vehicle accident damage,
to
- a visual examination of the secured foreign particles from both sides; and / or to
- a comparison of samples by superimposing evidence objects enclosed in forensic evidence films arranged one on top of the other in a sandwich-like manner.

## Revendications

1. Film pour préserver preuves (32), en particulier pour préserver des preuves en cas de dommages causés par un accident de véhicule, avec
- un film adhésif (34) qui a un film support en plastique transparent (10) et une couche adhésive (12) appliquée sur un côté, la couche adhésive (12) étant conçue pour détacher et préserver des traces d'un emplacement de trace, et
- une feuille de couverture de séparation (14), qui est au moins partiellement amovible pour recouvrir la couche adhésive (12) à l'état de pré-utilisation et à l'état de stockage, et qui présente au moins sur sa face tournée vers la couche adhésive (12) un revêtement siliconé (16) ou a une qualité de surface qui peut sinon être séparée de manière non destructive de la couche adhésive, dans lequel
la feuille de couverture de séparation (14) est conçue au moins dans des zones partielles sous la forme d'un film hautement transparent, ce qui permet d'examiner la feuille adhésive (32) munie de la feuille de couverture de séparation (14) à travers la feuille de couverture de séparation (14) après fixation preuve,
**caractérisé en ce que**
le film de protection des preuves (32) est essentiellement conçu avec une découpe de base rectangulaire avec des côtés longitudinaux et étroits, et **en ce que** la feuille de couverture de séparation (14) est reliée au film adhésif (34) sur un côté longitudinal au moyen d'un liaison (28) non-stop et solide et essentiellement linéaire, qui ne peut pas être détachée mécaniquement sans détruire les feuilles dans des conditions régulières, notamment au moyen d'un adhésif ou au moyen d'un soudage de feuilles.

2. Film pour préserver preuves (32) selon la revendication 1,
**caractérisé en ce que**
le film adhésif (34) présente, afin d'obtenir la liaison solide avec la feuille de couverture de séparation (14), une section en forme de bande (28) repliée en direction de la couche adhésive d'environ 180° sur le côté de la couche adhésive, dans laquelle la couche adhésive (12) colle le film adhésif (34) sur la face (30) de la feuille de couverture de séparation opposée à la face siliconée ou autrement revêtue, ou que, inversement, la feuille de couverture de séparation a une partie repliée d'environ 180°, de sorte que la face opposée à la face siliconée ou autrement revêtue de la zone repliée de la feuille de couverture de séparation soit collée à la couche adhésive.

3. Film pour préserver preuves (32) selon la revendication 1 ou 2,
**caractérisé en ce que**
le film adhésif (34) et/ou la feuille de couverture de séparation (14) sont conçus pour l'application d'étiquettes d'identification, et/ou qu'à intervalles réguliers, des éléments d'identification optique sont préimprimés pour l'identification sans ambiguïté de la section de film de sécurisation de trace utilisée, en particulier des numéros d'identification ou des codes-barres non ambigus.

4. Film pour préserver preuves (32) selon l'une quelconque des revendications 1 à 3,
**caractérisé en ce que**
le film pour préserver preuves (32) est essentiellement conçu avec une découpe de base rectangulaire avec des côtés longs et étroits, et que sur un côté long qui est opposé à une connexion fixe (28) éventuellement existante du film adhésif (34) et le feuille de couverture de séparation (14), l'effet de la couche adhésive (12) est annulé dans la zone de bord.

5. Film pour préserver preuves (32) selon la revendication 4,
**caractérisé en ce que**
pour annuler l'effet de la couche adhésive (12), une bande de matériau essentiellement non transparente (18), en particulier une bande de papier, est solidement reliée à la couche adhésive (12) dans la zone de bord.

6. Film pour préserver preuves (32) selon la revendication 4 ou 5,
**caractérisé en ce que**
la feuille de couverture de séparation (14) sur le côté de la bande de matériau essentiellement non transparente (18) ne s'étend pas jusqu'au bord du film adhésif (34), mais se termine dans la zone de la bande de matériau essentiellement non transparente (18), de préférence de telle sorte que le bord d'extrémité correspondant de la feuille de couverture de séparation (14) soit sensiblement aligné avec le bord d'extrémité intérieur de la bande de matériau (18).

7. Film pour préserver preuves (32) selon la revendication 6,
**caractérisé en ce que**
la bande de matériau essentiellement non transparente (18) est conçue sur son côté (26) accessible à travers la structure de feuille de couverture de séparation évidée (14) pour porter un étiquetage permanent.

8. Film pour préserver preuves (32) à l'état pré-utilisé selon l'une des revendications 1 à 7,
**caractérisé en ce que**
ce film a une extension longitudinale nettement plus grande que sa dimension en largeur, et qu'une ou plusieurs perforations, en particulier des micro-perforations, sont prévues transversalement à l'extension longitudinale pour une séparation facile des sections individuelles de film de preuve.

9. Film pour préserver preuves (32) à l'état pré-utilisé selon l'une des revendications 1 à 8,
**caractérisé en ce que**
le film est conçu sous forme de produits de rôle.

10. Film pour préserver preuves (32) selon l'une des revendications 1 à 9,
**caractérisé en ce que**
- Le film support en plastique transparent (10) du film adhésif (34) est en PP (polypropylène), de préférence avec une épaisseur de couche d'env. 50 µm, et/ou
- que la couche adhésive (12) est essentiellement formée d'un adhésif hydrosoluble, et/ou
- Que la structure de feuille de couverture de séparation (14) est constituée essentiellement d'un film PET, de préférence avec une épaisseur de couche d'env. 50 µm, et/ou
- Que la feuille de couverture de séparation (14) pour produire l'effet de séparation est siliconée (16) au moins sur la face tournée vers la couche adhésive.

11. Film pour préserver preuves (32) selon l'une des revendications 1 à 10,
**caractérisé en ce que**
la couche adhésive (12) a une épaisseur de 10 µm à 100 µm, de préférence de 10 µm à 30 µm, de manière particulièrement préférée d'environ 18 µm avec une tolérance d'environ ± 2 µm.

12. Film pour préserver preuves (32) selon l'une des revendications 1 à 11,
**caractérisé en ce que**
la couche adhésive (12) est fixée de telle sorte que les traces fixées puissent être éliminées au moyen d'un solvant, en particulier ce que l'on appelle le Solvant Turc.

13. Utilisation d'un film pour préserver preuves (32) selon l'une des revendications 1 à 12, notamment un film pour préserver preuves en cas d'accident de véhicule accidenté,
à
- un examen visuel des particules étrangères fixées des deux côtés ; et/ou à
- une comparaison d'échantillons par superposition d'objets de preuves enfermés dans des films de preuves médico-légales disposés les uns sur les autres en sandwich.
